# EUROPEAN PATENT SPECIFICATION

(11) **EP 4 444 101 B1**
(45) Date of publication and mention of the grant of the patent: **22.10.2025**
(21) Application number: 22835323.1
(22) Date of filing: 09.12.2022
(51) Int. Cl.: A22C 17/00, A23J 3/22, A23P 30/00, B26D 1/15, B26D 1/45, B26D 5/00, B26D 5/06, B26D 5/08, B26D 7/06, B26D 9/00, B26F 1/38

(54) **FOODSTUFF PORTIONING DEVICE**
LEBENSMITTELPORTIONIERUNGSVORRICHTUNG
DISPOSITIF DE MISE EN PORTION DE PRODUITS ALIMENTAIRES

(30) Priority: 10.12.2021 NL 2030107
(43) Date of publication of application: 16.10.2024
(73) Proprietor: Plant Meat Makers B.V., 3812 RE Amersfoort (NL)
(72) Inventor: BREEL, Ernst Jan, 3812 RE AMERSFOORT (NL); DEKKERS, Birgit Laura, 3812 RE AMERSFOORT (NL); ZWIERS, Jort Evan Gerard, 3812 RE AMERSFOORT (NL)
(74) Representative: EP&C
(86) International application number: PCT/EP2022/085202
(87) International publication number: WO 2023/105053

(56) References cited:
- WO-A1-2022/031413
- WO-A1-2022/140405
- US-A- 3 780 607
- US-A1- 2015 053 058
- US-B2- 9 778 651
- US-B2- 9 778 651

## Description

### Field of the invention

The present invention relates to a foodstuff portioning device, configured to portion a slab of foodstuff material into foodstuff products. The present invention further relates to a foodstuff processing apparatus and to a method of portioning foodstuff materials.

### State of the art

At present, various types of methods are known for manufacturing foodstuff products, in particular for manufacturing meat substitutes. An example thereof is moulding, during which a mass of foodstuff material is injected or pressed in a mould, in order to model the material in a desired shape and size for foodstuff products.

Another way of manufacturing foodstuff products, in particular for manufacturing meat substitutes made from a biopolymer mixture, comprises subjecting a mixture of ingredients to mechanical energy, in order to provide texture to the foodstuff material. Examples thereof comprise an extrusion process or a shear cell process, for subjecting the foodstuff material to shear stresses, thereby providing texture and anisotropy to the foodstuff material.

However, the resulting foodstuff material is generally provided as a slab or as a ribbon, which is too large to package for consumer usage and which has an odd shape that does not mimic the shape and size of actual meat products.

At present, several processes are known to shape the slab of foodstuff material into foodstuff products, like stamping for example. However, these existing processes are not able to reproduce three-dimensional shapes and have been found to disturb the anisotropy in the foodstuff material.

Furthermore, US 2015/053058 A1 discloses a portioning system comprising a scanner for scanning work products being carried on a conveyor. A cutter system is provided that comprises an array or singular manifold cutter and single cutter, e.g. both water cutters, for cutting the work products into desired sized end pieces. The cutter assemblies are carried on respective carriages to move the cutters as required along predetermined cutting paths as controlled by control system.

### Object of the invention

It is therefore an object of the invention to provide a foodstuff portioning device that is able to portion foodstuff products, in particular meat substitutes, at an improved quality, or at least to provide an alternative foodstuff portioning device.

### Detailed description

The present invention provides a foodstuff portioning device, configured to portion a slab of foodstuff material into foodstuff products, comprising:
- a support surface for supporting the foodstuff material during portioning,
- at least one cutting device, each comprising a cutting element, configured to cut foodstuff products out of the slab of foodstuff material,
- an actuator device, preferably located substantially above the support surface,
wherein the at least one cutting device and/or the support surface is attached to the actuator device and wherein the actuator device is configured to move the at least one cutting device and the support surface relative to each other along a first horizontal axis and along a second horizontal axis, perpendicular to the first horizontal axis, and wherein the cutting element of each of the at least one cutting device is rotatable relative a vertical axis.

The at least one cutting element is at least one cutting blade.

The foodstuff portioning device thus relies on cutting for separating the slab of foodstuff material into individual foodstuff products. According to the present invention, a slab is understood as being a relatively elongate piece of foodstuff material, also known as a ribbon. Such a slab may initially have a relatively large length and width in a horizontal plane, compared to its thickness in a vertical direction. For example, the slab may have width that is significantly larger than its thickness and may have a length that is larger than its width.

By means of the cutting, the dimensions of the slabs of foodstuff material are reduced to match desired dimensions of foodstuff products. Accordingly, the shape of the foodstuff products is altered, for example in order to mimic the shape of actual meat products, like steak, fish fillets or chicken breast. The cutting may thereby involve a physical interaction between the cutting elements and the foodstuff material to effect the desired dimensions reduction.

During the cutting, the slab of foodstuff material is positioned on the support surface, so that the slab can be held in place and prevented from being moved. The support surface may be made of a suitable material in order to reduce bacterial growth, whilst offering sufficient resistance against damage resulting from the cutting. An example of a suitable material for the support surface is Polyoxymethylene (POM).

The at least one cutting device is movable relative to the support surface, so that the at least one cutting element of the respective cutting device can be moved through the slab of foodstuff material that is disposed on the support surface. The at least one cutting device may comprise a single cutting element to effect a single cut in the slab of foodstuff material, or may comprise multiple cutting devices with multiple cutting elements to effect a number of cuts in the slab of foodstuff material, corresponding to the number of cutting elements.

The cutting elements of the cutting devices may be configured to contact the support surface during cutting, so that the slab of foodstuff material is cut across its entire thickness, to effect that the foodstuff products become separated entirely, instead of remaining connected by non-cut filaments. Alternatively, the cutting device may be configured to cut through only part of the thickness of the foodstuff material, so that eventual separation of individual foodstuff products may be carried out during post-cutting treatment, for example manually or by vibrating the partially-cut foodstuff products.

The at least one cutting element is embodied as at least one cutting blade, for example as a knife, oscillatory cutting element or cutting wheel. Such cutting blades are in physical contact with the foodstuff material during cutting, to mechanically interact with the material upon cutting.

The cutting elements may be stationary cutting elements, e.g. stationary cutting blades, such as knives, which remain at a certain height relative to the support surface during cutting. The cutting elements may comprise a single cutting surface, for example a flat cutting surface or a profiled cutting surface, for cutting three-dimensional shapes.

Alternatively, the cutting elements may be oscillatory cutting elements, e.g. oscillatory cutting blades, configured to describe an oscillatory movement during cutting, for example oscillating in a direction perpendicular to the plane of the support surface or in a cutting direction. This oscillations may be in the ultrasonic regime, which may reduce the effort of cutting through frozen or stiff foodstuff material. An oscillatory actuator, for example a shear piezo element, may be provided for effecting the oscillatory movements of the cutting elements.

As a further alternative, the cutting elements may be provided as cutting wheels, configured to roll through the foodstuff material and over the support surface during cutting.

The actuator device of the foodstuff portioning device may be functionally arranged in between the support surface and the cutting device, for example being attached to the support surface and being configured to move the cutting device relative to the support surface.

The actuator device may be arranged above the support surface and is then configured to suspend the cutting device above the support surface in accordance. The actuator device may be embodied as a gantry-like construction, comprising an arm that is arranged above the support surface, having a carriage for moving the cutting device along the arm. In addition, the arm may be movable along the support surface, to provide an additional degree of freedom to the movement of the cutting device, relative to the support surface.

The support surface of the portioning device is preferably a stationary support surface, which is at least stationary in a horizontal direction during cutting of the foodstuff material, to ensure that the foodstuff material is held stationary. This may be beneficial to obtain a reaction force from the foodstuff material onto the cutting element, to prevent undesired movements of the foodstuff material during cutting.

Alternatively, however, the cutting device may be held stationary and the support surface, having the slab of foodstuff material arranged thereon, may be moved. This may provide the benefit that fewer moving parts, like actuator, gear transmissions and bearing surface, face the foodstuff material, which may result in an improved food safety.

The actuator device may, for example, comprise electric, magnetic or pneumatic motors to effect the mutual movements of its components, e.g. of the arm and the carriage. Furthermore, the foodstuff portioning device may comprise a controller to control the motors of the actuator device for effecting the cutting movement of the cutting device relative to the support surface.

The actuator device may be configured to move the cutting device along a first horizontal axis and a second horizontal axis, which are aligned perpendicular to each other, i.e. both aligned parallel to the plane of the support surface. For example, the arm of the actuator device may be configured to move relative to the support surface along the first horizontal axis and the carriage may be configured to move relative to the arm along the second horizontal axis, so that the cutting device attached to the carriage can be moved both along the first horizontal axis and the second horizontal axis.

In addition, the cutting element of the cutting device, e.g. the respective cutting elements of the cutting devices, is configured to be rotated about the vertical axis, i.e. about an axis perpendicular to the plane of the support surface and perpendicular to the displacement of the cutting device along the first horizontal axis and the second horizontal axis. Preferably, the cutting element is configured to be rotated in dependence of a position of the cutting device relative to the support surface, for example in a manner that the cutting element is rotated about the vertical axis during movement of the cutting device, i.e. during cutting of the slab of foodstuff material.

The rotation of the cutting element may offer the benefit that the cutting surface of the cutting element can be directed in a direction in which the cutting element is moved through the slab of foodstuff material during cutting thereof. As such, the cutting element moves through the foodstuff material with the sharp cutting surface first, so that unwanted damage of the texture of the foodstuff material is minimized.

According to the present invention, the cutting element may not be merely rotated passively, i.e. as a result of the horizontal displacement of the cutting device effected by the actuator device, but the rotation can be carried out actively. In this way, the outer contour of the foodstuff products cut from the slab of foodstuff material may be defined more accurately, resulting in an improved quality of the foodstuff products. However, passive rotation of the cutting elements can be envisaged according to the present invention as well.

In an embodiment of the foodstuff portioning device, the actuator device is configured to move the cutting device and the support surface relative to each other along a vertical axis. The cutting device may be stationary along the vertical axis and the actuator device may be configured to vertically move the support surface. To this effect, at least part of the actuator device, i.e. at least an actuator configured to move the support surface, may be arranged underneath the support surface to further reduce contamination risks for these components.

If the support surface is moved relative to the cutting device, a cutting depth of the cutting device into the slab of foodstuff material can be changed, without requiring altering the specific cutting element that is used. On top of the ability to horizontally cut foodstuff products out of the slab of foodstuff material, this embodiment also enables cutting in the vertical direction, for example to locally alter the thickness of the products.

The mutual vertical movement between the support surface and the cutting element, e.g. the cutting blade may further be beneficial when it is desired to not cut the foodstuff material in full. For example, the cutting depth may be set very low, so that the cutting will only result in a surface pattern created on the foodstuff material, for example leaving a grill mark impression,

In an embodiment of the foodstuff portioning device, the at least one cutting device comprises at least one rotary drive, configured to rotate the respective cutting element, e.g. cutting blade, about the vertical axis.

The rotation of the cutting element about the vertical axis may thereby be effected by a rotary drive, for example an electric stepper motor, to rotate the cutting element relative to the carriage. The rotary drive may be positioned on the carriage, so that the rotary motor is moved relative to the support surface in conjunction with the at least one cutting element.

Preferably, the controller is configured to control the rotation of the cutting element, e.g. to control the rotary drive, in dependence of the horizontal position of the cutting device relative to the support surface.

The food production device may thereto comprise one or more position sensors to determine the horizontal position of the cutting device relative to the support surface, for example a first position sensor to determine the position of the arm of the actuator device relative to the support surface along the first horizontal axis and a second position sensor to determine the position of the carriage relative to the arm along the second horizontal axis.

The controller may be configured to control the actuator device on the basis of sensor signals from the first position sensor and the second position sensor and may be configured to control the rotation of the cutting element, i.e. to control the rotary drive, on the basis of sensor signals from the first position sensor and the second position sensor as well.

In an embodiment, the foodstuff portioning device comprises multiple cutting devices, arranged in a row. This row of cutting devices may be aligned parallel to the second horizontal axis.

The slab of foodstuff material may be typically significantly wider than the foodstuff products, so that multiple adjacent foodstuff products can be cut out over the width of the slab of foodstuff material. To this effect, multiple cutting devices may be located next to each other to cut out a corresponding number of foodstuff products simultaneously. As such, the overall time required to cut a certain number of foodstuff material from the slab of foodstuff material can be reduced.

Similarly, the slab of foodstuff material may be significantly longer than the foodstuff products, so that multiple adjacent foodstuff products can be cut out over the length of the slab of foodstuff material.

The multiple cutting devices may be attached to each other, so that a fixed mutual position is held between them during movement of the cutting devices. For example, the multiple cutting devices may be attached to the same carriage of the actuator device, so that all cutting devices can be moved in synchronicity.

In a further embodiment of the foodstuff portioning device, the multiple cutting devices comprise a single rotary drive and a linkage element, arranged to interconnect the rotary drive with the cutting elements of each of the multiple cutting devices. Furthermore, the rotary drive is, via the linkage element, configured to rotate all cutting elements about the vertical axis in synchronicity.

The single rotary drive may be shared by all of the cutting devices, so that all of their cutting elements can be rotated about the vertical axis by means of a single rotary drive. The single rotary drive may be attached to the carriage, so that it can be moved relative to the support surface in conjunction with the cutting devices.

In this way, only a single rotary drive is needed to rotate all of the cutting elements. In this way, it can be safeguarded that all of the cutting elements can cut out food products of the same shape and that no substantial variation is present between different food products.

In a further embodiment of the foodstuff portioning device, each of the cutting devices comprises a rotatable shaft, each having a respective cutting element, e.g. cutting blade, attached at a lower end thereof and a pulley at an upper end thereof. Furthermore, the linkage element is guided along the pulleys of each of the cutting devices and along a pulley attached to the rotary drive.

The cutting devices may each comprise a rotary bearing, for example a ball bearing, to guide the rotation of the shaft of the respective cutting device. The pulleys are fixedly attached to the shafts, so that, upon rotation of the shaft, the cutting element and the pulley are rotated accordingly. The rotary drive may comprise a pulley similar to the pulleys attached of the cutting devices.

The linkage element is guided along the pulley of the rotary drive and along the pulleys of the cutting devices. In this way, all pulleys become interconnected, so that rotation of one of the pulleys is transferred into rotation of the other pulleys. The pulleys of each of the cutting devices have equal dimensions, for example in terms of outer diameter, so that a full rotation of the cutting element of one of the cutting devices may result in a full rotation of the cutting elements of all other cutting devices.

The pulley of the rotary drive may have dimensions that differ from the dimensions of the pulleys of the cutting devices, for example in terms of outer diameter. As such, a transmission ratio different from 1:1 may be obtained between the pulley of the rotary drive and the pulleys of the cutting devices, so that a full rotation of the rotary drive may result into more than a single rotation or less than a single rotation of the cutting elements.

In a further embodiment of the foodstuff portioning device, the cutting elements, e.g. the cutting blades, are attached to their respective rotatable shafts by means of a quick release connection, for example by means of a form fit connection, such as a bayonet connection. As such, the cutting elements can be disconnected quickly from the rotatable shaft, for example in case it is desired to exchange a worn cutting element for a new cutting element.

The cutting devices may each comprise a locking member, configured to lock a position of the cutting element relative to the shaft, to prevent undesired rotations of the cutting element. This locking member may be integrated with the quick release connection to have a combined functionality.

In an embodiment, the food production device may comprise one or more rotation sensors to determine a rotational position of the cutting device, in particular of the at least one cutting element thereof, about the vertical axis. The food production device may comprise a respective rotation sensor for each of the cutting devices or may comprise a single rotation sensor that is configured to determine the rotational position of one of the cutting devices, in case this rotational position is representative for the rotational position of all of the cutting devices, for example in case they are interconnected via a linkage element.

According to this embodiment, the controller is further configured to control the rotary drive on the basis of sensor signals from the one or more rotation sensors, in order to control the rotation of the cutting elements, i.e. over time and/or in dependence of the horizontal position of the cutting elements.

In an embodiment of the foodstuff portioning device, the cutting elements, e.g. the cutting blades, have a profiled, i.e. a two-dimensional cross-sectional shape, seen in a direction onto a cutting surface of the cutting element.

The two-dimensional shape implies that the cutting surface is not necessarily aligned in a vertical plane parallel to the vertical axis. Instead, at least part of the cutting surface is aligned non-parallel to the vertical axis and for example has a component parallel to one or both of the first horizontal axis and the second horizontal axis.

For example, an upper side of the cutting element is aligned parallel to the vertical axis. This upper side of the cutting element is thereby able to cut a vertical side contour of the food products. A lower side of the cutting element may be curved, to form a transition from being aligned vertically to having at least a component aligned parallel to one of the horizontal axes. With this lower side of the cutting element, an undercut of the food product, i.e. a rounded bottom contour of the food product, may be obtained. Such a cutting element, e.g. such a cutting blade, may have a shape that mimics a "J", in order to be able to cut food products with a sharply-edged top contour and a rounded bottom contour.

Similarly, a lower side of the cutting elements may be aligned vertically and an upper side may curve towards having at least a horizontal component, to obtain a rounded top contour of the food product. A further benefit of this upper side having a horizontal component is that the thickness of the food products can also be reduced locally, during cutting their contours from the slab of foodstuff material. For example, the height of the foodstuff products can be reduced at their outer contour, to obtain a gradually increasing height, see from an outer contour of the foodstuff products towards the centre thereof.

In an embodiment, the cutting element, e.g. the cutting blade, may have a shape that mimics a "C", having a curved upper side, a vertical middle part and a curved lower side, in order to be able to cut food products with a rounded top contour and a rounded bottom contour.

In an embodiment, the cutting elements of each of the cutting devices, e.g. each of the cutting blades, have the same shape. As such, all cutting devices are configured to cut out the same shape of foodstuff products.

Alternatively, the cutting elements of the cutting devices may have different shapes. For example first and second cutting elements may be provided alternately, seen along the row of cutting devices. Each of the different cutting elements may be configured to cut out foodstuff products with a different shape or may each be configured to cut out part of the foodstuff products, so that the entire contour of the foodstuff products can be cut out with multiple cutting devices in series.

In an embodiment of the foodstuff portioning device, each of the cutting devices comprises an elastic element, each configured to press the respective cutting element against the support surface at a predetermined pretension force.

The elastic elements may be compressive springs that are configured to press the respective rotatable shafts in a downward vertical direction relative to the carriage. The cutting elements, being attached to the rotatable shafts, are pressed in the downward vertical direction as well. Alternatively, the elastic elements are configured to press the respective cutting elements in a downward vertical direction relative to the rotatable shafts. As a result, the cutting elements may be pressed against the support surface, so that the slab of foodstuff material can be cut through in full.

In a further embodiment, the elastic elements are adjustable, to adjust the predetermined pretension force. As such, the forces exerted by the elastic elements may be altered, for example by means of a set screw, so that the degree of penetration of the cutting elements into the foodstuff material can be altered. It may thereby be achieved that the cutting device may be configured to cut through only part of the thickness of the foodstuff material. The foodstuff material is not fully cut through, so that eventual separation of individual foodstuff products may be carried out during post-cutting treatment, for example manually or by vibrating the partially-cut foodstuff products.

In an embodiment, the foodstuff portioning device further comprises a locking device, configured to secure a position of the foodstuff material on the support surface. This securing may prevent undesired shifting of the foodstuff material on the support surface during cutting. The locking device is thereto configured to absorb reactional forces from the cutting element, e.g. the cutting blade, acting on the foodstuff material. This is especially beneficial where the cutting elements are embodied as cutting blades, for which mechanical interactions, and thus transfer of mechanical forces, is needed during cutting.

In an embodiment, the foodstuff portioning device, e.g. the locking device thereof, further comprises at least one movable constraining element, configured to be moved between a released position, allowing receipt of the slab of foodstuff material on the support surface, and at least one clamping position, configured to clamp the slab of foodstuff material to hold it in place on the support surface.

The movable constraining elements can be arranged on the support surface, at least in their clamping positions, so that the slab of foodstuff material can be clamped in between the constraining elements whilst being arranged on the support surface during cutting.

In the released position, the movable constraining elements may be located away from the support surface, in order to allow the slab of foodstuff material to become arranged on the support surface. In the at least one clamping position, the movable constraining elements may have been moved towards the slab of foodstuff material and towards the support surface.

The device may for example comprise two constraining elements, which may be disposed opposite to each other, so that the constraining elements can clamp the slab of foodstuff material from opposite sides. At least one of these constraining elements is thereby movable to effect clamping of the slab of foodstuff material.

The device may alternatively comprise four constraining elements, being aligned at right angles from each other, in order to clamp the slab of food stuff material from four sides. Two first ones of the constraining elements can be aligned parallel to the first horizontal axis and two second ones of the constraining elements can be aligned parallel to the second horizontal axis. At least one of the first constraining elements is thereby movable along the second horizontal axis and at least one of the second constraining elements is thereby movable along the first horizontal axis, in order to together effect clamping of the slab of foodstuff material from four sides.

Alternatively or additionally, one or more of the constraining elements may be configured to move to and from the support surface in a direction perpendicular to the plane of the support surface, i.e. in a vertical direction relative to a horizontal support surface. As such, the constraining elements may be upwardly moved away from the support surface in the released position, to allow for passage of the slab of foodstuff material underneath the constraining elements, and may be moved downward towards the support surface in the at least one clamping position, to effect clamping of the slab of foodstuff material.

The movable constraining elements may be movable into multiple different clamping positions, i.e. into multiple pairs of clamping positions for the opposed constraining elements. As such, it may be obtained that the cutting elements not need to describe the same cutting path over the support surface during each cutting action. Instead, the cutting devices may describe different cutting paths in conjunction with the different clamping positions. Possible wear of the support surface can thereby be spread over multiple different cutting paths, to be able to increase the lifetime of the support surface.

Preferably, the controller may be configured to generate random clamping positions and to move the constraining elements to the random clamping positions for each cutting action. This randomization may further spread the cutting paths over the entire support surface and may reduce wear of the cutting surface even further.

The controller may be configured to position the cutting elements relative to the support surface in dependence of the clamping position that is selected, in order to ensure that the foodstuff products are cut along the appropriate cutting path that belongs to a certain clamping position.

In an embodiment of the foodstuff portioning device, one or more of the movable constraining elements, i.e. a transverse one of the movable constraining elements, comprises a number of cavities, which project outside the support surface in a horizontal direction. The cavities are each configured to receive a cutting element of the cutting devices when a slab of foodstuff material is loaded onto the support surface. The cutting elements thereby also project outside the support surface, in order not to block movement of the slab. These cavities are in particular beneficial when the cutting elements are shaped as a "C", for which it is not possible to lower them into the slab from above, but which could only enter the slab from the side.

In a further embodiment, the foodstuff portioning device may be configured to receive a cutting board on which the slab of foodstuff material is arranged. These cutting boards can be received on the support surface, so that the slab of foodstuff material does not need to be arranged on the support surface directly, but only indirectly via the cutting board.

According to this embodiment, the at least one movable constraining element is configured to clamp the slab of foodstuff material on the cutting board in the at least one clamping position and, additionally, the cutting board may in turn be held in place on the support surface by a cutting board constraining device.

The present invention further provides a foodstuff processing apparatus, comprising:
- the foodstuff portioning device as disclosed herein,
- a trimming device, located upstream of the foodstuff portioning device and configured to trim a width of the slab of foodstuff material, and
- an upstream conveyor device, configured to transport the slab of foodstuff material from the trimming device to the foodstuff portioning device.

The foodstuff processing apparatus is based on the foodstuff portioning device, but additionally comprises one or more pre-treatment stations for the slab of foodstuff material and one or more post-treatment stations for the cut-out foodstuff products.

The trimming device may be an example of a pre-treatment station, configured to treat the slab of foodstuff material prior to entry in the portioning device. The trimming device may be configured to trim rough edges of the slab of foodstuff material coming from a texturizing device.

In the trimming device, the width of the slab of foodstuff material is reduced to a certain predetermined width, substantially corresponding to a spacing between the constraining elements in their clamping position, in order to ensure that the slab of foodstuff material can be clamped reliably.

The trimming device may comprise two trimming wheels that are spaced at a distance from each other that corresponds to the desired width of the slab of foodstuff material, so that the width can be reduced while the slab of foodstuff material is moved underneath the trimming wheels.

The upstream conveyor device is configured to move the slab of foodstuff material towards the portioning device. Preferably, the trimming device is arranged stationary above the upstream conveyor device, so that the trimming of the slab of foodstuff material can be carried out while the foodstuff material is transported on the upstream conveyor device.

In particular, the trimming wheels may be configured to roll over the upstream conveyor device to interact with the slab of foodstuff material arranged thereon and to trim the slab of foodstuff material to the desired width.

In an embodiment of the foodstuff processing apparatus, the trimming device comprises at least one deflector plate, configured to remove any trimmed-off parts away from the slab of foodstuff material.

Seen along a transportation direction of the slab of foodstuff material, the at least one deflector plate may be located downstream of the trimming wheels and may be arranged just above the surface of the upstream conveyor device on which the slab of foodstuff material is arranged. The deflector plates may be configured to remain stationary, so that any trimmed-off parts of the slab of foodstuff material are forced against the deflector plates upon movement of the upstream conveyor device. The deflector plates may be configured to sidewardly slide the trimmed-off parts from the upstream conveyor device, after which the trimmed-off parts may be collected for further use.

Each of the trimming wheels may have an associated deflector plate arranged behind it, which deflector plates may each bend away from a central part of the upstream conveyor device, in order to deflect trimmed-off parts on opposed sides of the trimmed slab of foodstuff material.

In an embodiment, the foodstuff processing apparatus further comprises a cooling device, located upstream of the foodstuff portioning device and configured to cool the slab of foodstuff material.

The cooling device may be located upstream or downstream relative to the trimming device, seen along the transportation direction of the slab of foodstuff material. The cooling device is configured to lower the temperature of the slab of foodstuff material, which may result in an increased stiffness of the foodstuff material. The increased stiffness of the foodstuff material may reduce deformations of the foodstuff material during cutting, otherwise resulting from interaction forces between the cutting elements and the foodstuff material.

The cutting device may be configured to cool the foodstuff material to a temperature less than 10°C, preferably less than 5°C, for example to 2°C. It was found by the inventors that a temperature in this range may be in particular beneficial for cutting biopolymer mixtures for meat substitutes.

In an embodiment of the foodstuff processing apparatus, at least one of the movable constraining elements is configured to move the slab of foodstuff material from the upstream conveyor device onto the support surface. This one of the movable constraining elements may be defined as a loading movable constraining element. Meanwhile, the support surface is preferably a stationary support surface that is at least stationary in a horizontal direction during cutting of the foodstuff material, to ensure that the foodstuff material is held stationary. This may be beneficial to obtain a reaction force from the foodstuff material onto the cutting element, to prevent undesired movements of the foodstuff material during cutting.

In its release position, this loading movable constraining element may project over the upstream conveyor device, so that it is able to contact the slab of foodstuff material that is supplied with the upstream conveyor device. Upon movement towards its clamping position, the loading movable constraining element is configured to take along the slab of foodstuff material and to move the slab of foodstuff material onto the support surface to enable clamping and cutting of the slab of foodstuff material. This movement of the loading movable constraining element from the released position to the clamping position may be carried out parallel to the second horizontal axis.

According to this embodiment, no dedicated transfer equipment is needed for moving the slab of foodstuff material from the upstream conveyor device into the foodstuff portioning device, but the transfer may be carried out by the foodstuff portioning device itself, reducing complexity of the foodstuff processing apparatus.

In an embodiment, the foodstuff processing apparatus further comprises a separation device, located downstream of the foodstuff portioning device and configured to separate the cut-out foodstuff products from remains of the slab of foodstuff material, and a downstream conveyor device, configured to transport the cut-out foodstuff products and the remains of the slab of foodstuff material from the foodstuff portioning device to the separation device.

Upon exiting the foodstuff portioning device, the cut-out foodstuff products may remain surrounded by the remains of the slab of foodstuff material, depending on the geometry and packing efficiency of the foodstuff products in the slab. The products and remains are therefore together configured to end up on the downstream conveyor device for further post-cutting treatment.

The separation device is an example of a post-treatment device, being configured to filter out the products and to discard the remains. For example, the separation device may be a vibratory separation device, configured to vibrate a separation surface, in an aim to break the remains in smaller parts, to allow for more convenient separation from the products.

For example, the separation surface may be embodied as a mesh surface with a mesh size small enough to prevent the cut-out foodstuff products from falling through and large enough to allow broken remains of the slab of foodstuff material to fall through, after which the remains may be collected for further use as well.

In an embodiment of the foodstuff processing apparatus, at least one of the movable constraining elements is configured to move the cut-out foodstuff products and the remains of the slab of foodstuff material from the support surface onto the downstream conveyor device. This one of the movable constraining elements may be defined as a discharge movable constraining element

The discharge movable constraining element may further be configured to be moved into a discharge position, in which it may project over the downstream conveyor device. As such, it may be configured to take along the cut-out products and the remains from the support surface onto the downstream conveyor device upon movement towards its discharge position. This movement of the discharge movable constraining element from the clamping position to the discharge position may be carried out parallel to the second horizontal axis as well.

Preferably, the discharging movable constraining elements may also be the loading movable constraining element, being configured to both move the slab of foodstuff material from the upstream conveyor device onto the support surface and to move the cut-out food products and the remains of the slab of foodstuff material from the support surface onto the downstream conveyor device.

According to this embodiment, no dedicated transfer equipment is needed for moving cut-out products and the remains of the slab of foodstuff material from the foodstuff portioning device onto the downstream conveyor device, but the transfer may be carried out by the foodstuff portioning device itself, even further reducing complexity of the foodstuff processing apparatus.

In an embodiment, the foodstuff processing apparatus comprises one or more cutting boards on which the slab of foodstuff material is arranged upon travelling through the apparatus. The cutting boards may be configured to be transported through the processing apparatus with the slab of foodstuff material arranged on it, so that the slab does not need to be arranged on the upstream conveyor device, the support surface or the downstream conveyor directly, but only indirectly via the cutting board.

This provides the benefit that the upstream conveyor device, the support surface and the downstream conveyor may not come into contact with the foodstuff material directly, which reduces any contamination risks for these components and which may reduce a cleaning effort.

The present invention further provides a method of portioning foodstuff materials, in particular a slab of a biopolymer mixture for meat substitutes, by means of a foodstuff portioning device as disclosed herein and/or by means of a foodstuff processing apparatus as disclosed herein, comprising the steps of:
- arranging a slab of foodstuff material on a support surface of the foodstuff portioning device,
- moving, by means of the actuator device, the at least one cutting device and the support surface relative to each other along the first horizontal axis and/or the second horizontal axis, and
- rotating, e.g. by means of the rotary drive, the cutting element relative to the vertical direction in dependence of the horizonal movement of the at least one cutting device.

The foodstuff portioning method relies on cutting for separating the slab of foodstuff material into individual foodstuff products. By means of the cutting, the dimensions of the slabs of foodstuff material are reduced to match desired dimensions of foodstuff products. Accordingly, the shape of the foodstuff products is altered, for example in order to mimic the shape of actual meat products, like steak, fish fillets or chicken breast.

During the cutting, the slab of foodstuff material is positioned on the support surface, so that the slab can be held in place and prevented from being moved. The cutting device is moved relative to the support surface, so that the at least one cutting element of the cutting device is moved through the slab of foodstuff material that is disposed on the support surface. During this cutting movement, sharp cutting surface of the cutting elements may protrude in a displacement direction of the cutting device relative to the support surface, in order to separate cut foodstuff products from remains of the slab of foodstuff material.

Furthermore, the cutting movement may comprise moving the cutting device relative to the support surface in an annular path, so that the entire perimeter of the foodstuff products can be cut by a single cutting movement.

The cutting elements have a profiled, i.e. a two-dimensional cross-sectional shape, seen in a direction onto a cutting surface of the cutting element, which implies that at least part of the cutting surface is aligned non-parallel to the vertical axis and for example has a component parallel to one or both of the first horizontal axis and the second horizontal axis. A lower side of the cutting elements may be curved, to obtain a rounded bottom contour of the food product and an upper side of the cutting elements may curve towards being horizontal, to obtain a rounded top contour of the food product.

The actuator device of the foodstuff portioning device may be arranged above the support surface and thereby suspends the cutting device above the support surface in accordance. Alternatively, the actuator device may be located underneath the support surface and may be configured to move the support surface with respect to the at least one cutting device being held stationary.

Furthermore, the method may comprise the controlling of the actuator device with a controller for effecting the cutting movement of the cutting device relative to the support surface.

The actuator device moves the cutting device and/or the support surface along a first horizontal axis and a second horizontal axis, which are aligned perpendicular to each other, i.e. both aligned parallel to the plane of the support surface.

According to the method, the cutting element of the cutting device is rotated about the vertical axis, i.e. about an axis perpendicular to the plane of the support surface and perpendicular to the displacement of the cutting device along the first horizontal axis and the second horizontal axis. The rotation of the cutting element about the vertical axis is effected by a rotary drive, which may rotate the cutting element relative to a carriage of the actuator device. According to the present invention, the cutting element is thus not merely rotated passively, but is rather carried out actively.

Preferably, the cutting element is rotated in dependence of a position of the cutting device relative to the support surface, for example in a manner that the cutting element is rotated about the vertical axis during movement of the cutting device, i.e. during cutting of the slab of foodstuff material. This may be controller by the controller, for example in dependence of the horizontal position of the cutting device relative to the support surface.

The rotation of the cutting element may offer the benefit that the cutting surface of the cutting element can be directed in a direction in which the cutting element is moved through the slab of foodstuff material during cutting thereof. As such, the cutting element moves through the foodstuff material with the sharp cutting surface first, so that unwanted damage of the texture of the foodstuff material is minimized.

In an embodiment of the method, the step of moving the comprises the moving of all cutting devices by the actuator device in synchronicity. Furthermore, the step of rotating comprises the rotating of all cutting elements by the rotary drive in synchronicity.

The cutting may be carried out by means of a number of cutting devices that may be located next to each other to cut out a corresponding number of foodstuff products simultaneously. As such, the overall time required to cut a certain number of foodstuff material from the slab of foodstuff material can be reduced. The multiple cutting devices may be attached to each other, so that a fixed mutual position is held between them during movement of the cutting device.

The multiple cutting devices comprise a single rotary drive and a linkage element, arranged to interconnect the rotary drive with the cutting elements of each of the multiple cutting devices. The single rotary drive is shared by all of the cutting devices, so that all of their cutting elements are rotated about the vertical axis by means of a single rotary drive.

In this way, only a single rotary drive is needed to rotate all of the cutting elements. In this way, it can be safeguarded that all of the cutting elements can cut out food products of the same shape and that no substantial variation is present between different food products.

### Brief description of drawings

Further characteristics of the invention will be explained below, with reference to embodiments, which are displayed in the appended drawings, in which:
Figure 1 schematically depicts an embodiment of the foodstuff portioning device according to the invention,
Figure 2 depicts the cutting devices of the foodstuff portioning device of figure 1,
Figure 3 depicts a cutting element of a cutting device of figure 2,
Figure 4 depicts a cross-sectional view on the cutting element of figure 3,
Figure 5 schematically depicts an embodiment of the foodstuff processing apparatus according to the present invention,
Figure 6 depicts the trimming device of the foodstuff processing apparatus of figure 5,
Figure 7a depicts a foodstuff product obtained by means of the foodstuff processing apparatus of figure 5, and
Figure 7b depicts a slab of foodstuff material that is cut by means of the foodstuff processing apparatus of figure 5,

Throughout the figures, the same reference numerals are used to refer to corresponding components or to components that have a corresponding function.

### Detailed description of embodiments

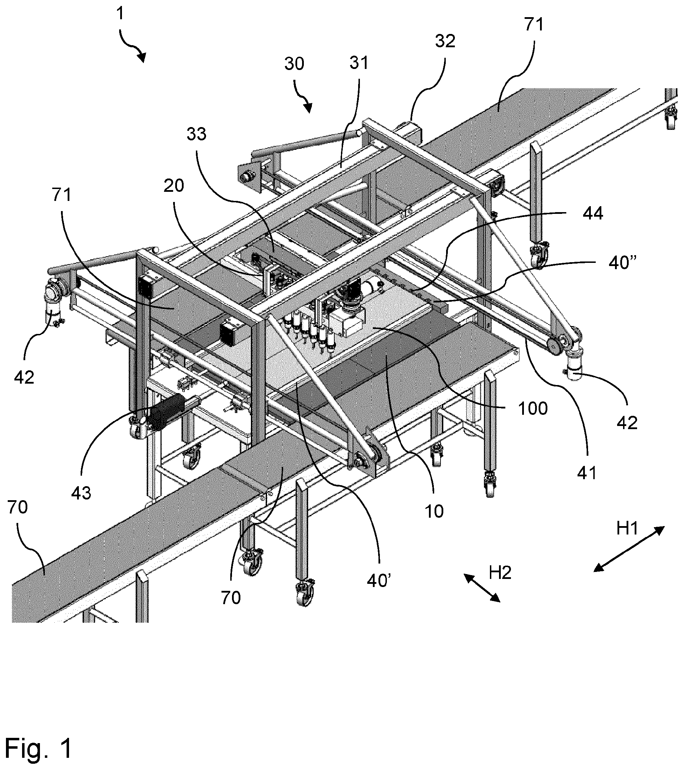

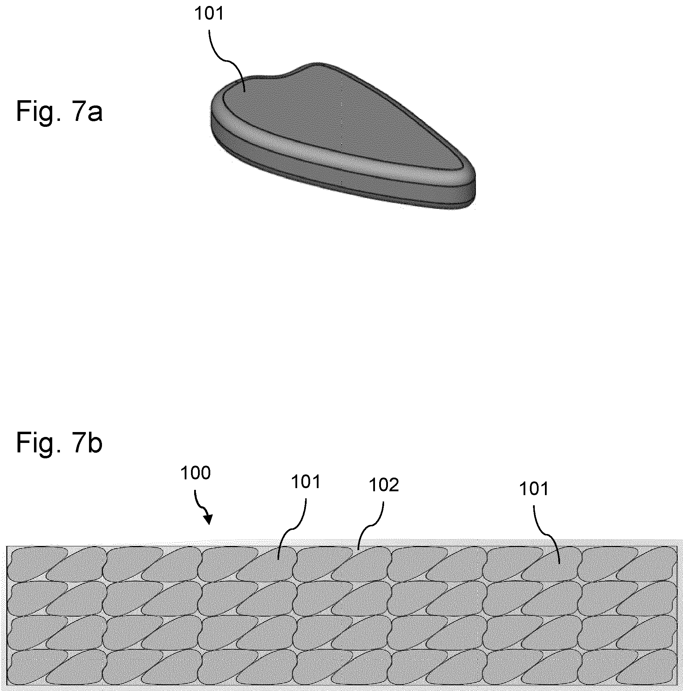

Figure 1 schematically depicts an embodiment of the foodstuff portioning device, to which is referred with reference numeral 1. The foodstuff portioning device 1 is configured to cut a slab 100 of foodstuff material into foodstuff products 101. In figures 7a and 7b, examples of foodstuff products 101 and slabs of foodstuff material 100 are shown respectively.

These slabs 100 are too large to package for consumer usage and have an odd shape that does not mimic the shape and size of actual meat products. By cutting the slab 100 into foodstuff products 101, the foodstuff material is converted into a shape suitable for consumer usage.

The foodstuff portioning device 1 comprises a support surface 10, on which the slab 100 is received during cutting. On the support surface 10, the slab 100 can be held in place and is prevented from being moved. The support surface 10 in the present embodiment is made of Polyoxymethylene (POM), which is a material that aims to reduce bacterial growth, whilst offering sufficient resistance against damage resulting from the cutting.

In the present embodiment, the support surface 10 is a stationary surface on which the slab 100 is directly received. Alternatively, the support surface may be formed by a conveyor belt, to allow for movement of the slab 100 in and out of the foodstuff portioning device, or the support surface may be configured to receive a cutting board on which the slab of foodstuff material is arranged. These cutting boards can be received on the support surface, so that the slab of foodstuff material does not need to be arranged on the support surface directly, but only indirectly via the cutting board.

The foodstuff portioning device 1 further comprises a plurality of cutting devices 20, which are movable relative to the support surface 10 to effect cutting of the slab 100. In the present embodiment, the support surface 10 is held stationary and the cutting devices 20 are moved to effect the cutting. Alternatively, however, the cutting devices 20 can be held stationary and the support surface 10 can be moved.

The foodstuff portioning device 1 comprises an actuator device 30, which is configured to effect the movement of the cutting devices 20 relative to the support surface 10. The actuator device 30 is arranged above the support surface 10 and suspends the cutting devices 20 above the support surface 10 in accordance. The actuator device 30 is embodied as a gantry, comprising two parallel horizontal arms 31, which extend above the support surface 10 and which are aligned parallel to a first horizontal direction H1. The cutting devices 20 are configured to be moved in the first horizontal direction H1 along the arms 31 by means of a first set of the electric motors 32. The actuator device 30 further comprises a carriage 33, which extends in a second horizontal direction H2, perpendicular to the first horizontal direction H1 and which is functionally arranged in between the arms 31 and the cutting devices 20. The cutting devices 20 are configured to be moved relative to the carriage 33 in the second horizontal direction H2, so that the cutting devices 20 are movable relative to the support surface 10 in the first horizontal direction H1 and the second horizontal direction H2.

The foodstuff portioning device 1 further comprises a plurality of movable constraining elements 40, which are configured to hold the slab 100 in place on the support surface 10. The movable constraining elements 40 are configured to be moved between a released position and at least one clamping position. In the released position, the movable constraining elements 40 allow for receipt of the slab 100 on the support surface 10, and in the clamping positions, the movable constraining elements 40 are configured to clamp the slab 100 to hold it in place on the support surface 10.

The foodstuff portioning device 1 comprises four movable constraining elements 40, which are aligned at right angles from each other, in order to clamp the slab 100 from four sides. In the present embodiment, the movable constraining elements 40 are embodied as movable beams that are arranged on the support surface 10 in their clamping positions. In figure 1, the beams are displayed in a clamping position, clamping the slab 100 in between them.

The movable constraining elements 40 are movable in the horizontal directions H1, H2, upon moving between the released position and the clamping positions. Two of the movable constraining elements 40 are longitudinal movable constraining elements 40', which extend in the first horizontal direction H1 and which are movable in the second horizontal direction H2. These longitudinal movable constraining elements 40' are movable via a set of cables 41 that are guided in the second horizontal direction H2 and that are driven by respective longitudinal clamping actuators 42.

Two others of the movable constraining elements 40 are transverse movable constraining elements 40", which extend in the second horizontal direction H2 and which are movable in the first horizontal direction H1. The transverse movable constraining elements 40" are each directly attached to a transverse clamping actuator 43, each configured to move a transverse movable constraining element 40" relative to the support surface 10.

In figure 1, it is visible that one of the transverse movable constraining elements 40" comprises a number of cavities 44, which project outside the support surface 10 in a horizontal direction. The cavities 44 are each configured to receive a cutting element 21 of the cutting devices 20 when a slab 100 of foodstuff material is loaded onto the support surface 10. The cutting elements 21 thereby also project outside the support surface 10, in order not to block movement of the slab 100. These cavities 44 are in particular beneficial with the present cutting elements 21 that are shaped as a "C", for which it is not possible to lower them into the slab 100 from above, but which could only enter the slab 100 from the side.

The movable constraining elements 40 are, despite being shown in a single clamping position in figure 1, movable into multiple different clamping positions. As such, it may be obtained that the cutting devices 20 do not need to describe the same cutting path over the support surface 10 during each cutting action. Instead, the cutting devices 20 may describe different cutting paths in conjunction with the different clamping positions.

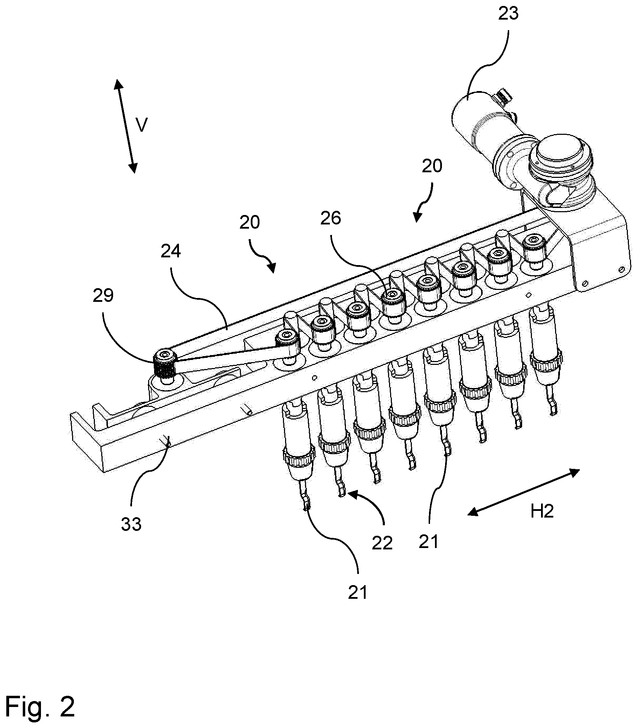

Figure 2 depicts a view on the cutting devices 20 of the foodstuff portioning device 1 of figure 1. According to the present embodiment, the foodstuff portioning device 1 comprises eight cutting devices 20, which are attached to the carriage 33 and which are arranged in a row. This row of cutting devices 20 is aligned parallel to the second horizontal axis H2. As a result, the multiple cutting devices 20 may be configured to cut out eight foodstuff products 101 simultaneously. Via the carriage 33, the cutting devices 20 are attached to each other, so that a fixed mutual position is held between them during movement of the cutting devices 20 and that all cutting devices 20 can be moved in synchronicity.

The cutting devices 20 each comprise a cutting element 21 that projects in the slab 100 of foodstuff material during cutting. In the present embodiment, the cutting elements 21 of the cutting devices 20 are configured to contact the support surface 10 during cutting, so that the slab 100 is cut across its entire thickness, to effect that the foodstuff products 101 become separated entirely, instead of remaining connected by non-cut filaments.

The cutting elements 21 are stationary cutting elements 21, in particular stationary knives, which remain at a certain height relative to the support surface 10 during cutting. The cutting elements 21 further comprise a single profiled cutting surface 22, which faces in a movement direction of the cutting devices 20 relative to the support surface 10.

The cutting elements 21 of the cutting devices 20 are configured to be rotated about a vertical axis V, which is aligned perpendicular to the plane of the support surface 10 and perpendicular to the first horizontal direction H1 and the second horizontal direction H2. During use, the cutting elements 21 are configured to be rotated in dependence of a position of the cutting devices 20 relative to the support surface 10, for example in a manner that the cutting elements 21 are rotated about the vertical axis V during movement of the cutting devices 20, i.e. during cutting of the slab 100. The rotation of the cutting elements 21 offers the benefit that the cutting surfaces 22 of the cutting elements 21 can be directed in a direction in which the cutting elements 21 are moved through the slab 100.

The cutting devices 20 comprise a rotary drive 23, which configured to rotate the cutting elements 21 about the vertical axis V. In the present embodiment, the rotary drive 23 is embodied as a stepper motor 23 that is attached to the carriage 33, configured to rotate the cutting elements 21 relative to the carriage 33. The stepper motor 23 is, as a result of being positioned on the carriage 33, moved relative to the support surface 10 in conjunction with the cutting elements 21.

In the present foodstuff portioning device 1, a controller is provided to control the rotation of the cutting elements 21 by controlling the rotary drive 23, in dependence of the horizontal position of the cutting devices 20 relative to the support surface 10.

In the embodiment shown in figure 2, the cutting devices 20 are attached to a single rotary drive 23 by means a linkage element 24, embodied as a belt 24. The belt 24 is arranged to interconnect the rotary drive 23 with the cutting elements 21 of each of the eight cutting devices 20. Furthermore, the rotary drive 23 is, via the belt 24, configured to rotate all cutting elements 21 about the vertical axis V in synchronicity.

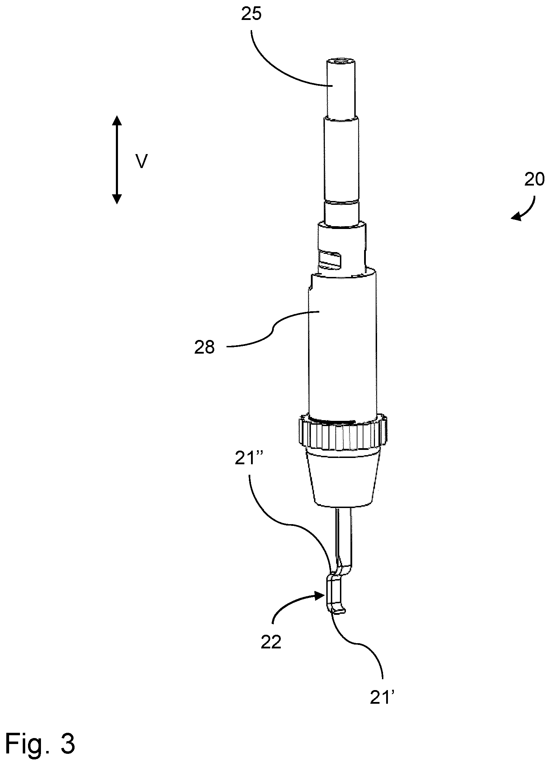

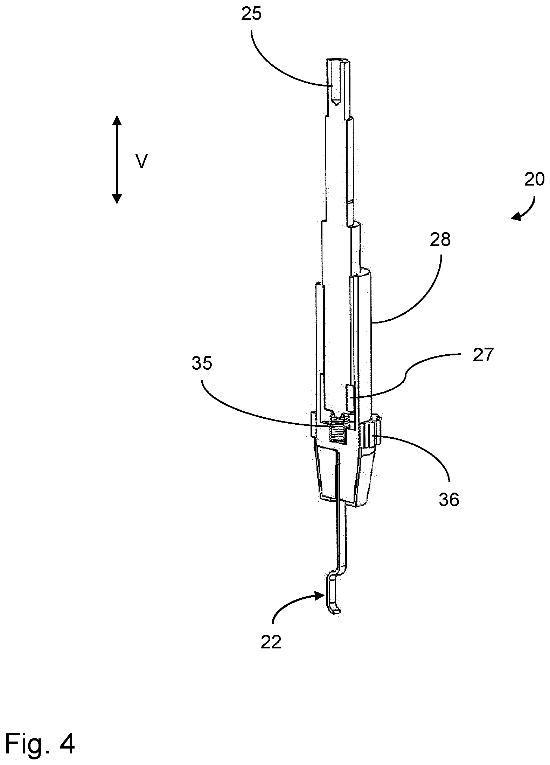

Each of the cutting devices 20 comprises a rotatable shaft 25, as is best shown in figures 3 and 4. The shafts 25 have a respective cutting element 21 attached at a lower end thereof and a pulley 26 at an upper end thereof. The cutting devices 20 each comprise a locking member 27, configured to lock a position of the cutting element 22 relative to the shaft 25, to prevent undesired rotations of the cutting element 22. The pulleys 26 are fixedly attached to the shafts, so that, upon rotation of the shaft 25, the cutting element 21 and the pulley 26 are rotated accordingly. The rotary drive 23 comprises a pulley similar to the pulleys 26 attached of the cutting devices 20.

The linkage element, i.e. the belt 24, is guided along a pulley of the rotary drive 23 and along the pulleys 26 of the cutting devices 20. In this way, all pulleys 26 become interconnected, so that rotation of one of the pulleys 26 is transferred into rotation of the other pulleys 26. The pulleys 26 of each of the cutting devices 20 have equal dimensions, i.e. in terms of outer diameter, so that a full rotation of the cutting element 21 of one of the cutting devices 20 may result in a full rotation of the cutting elements 21 of all other cutting devices 20. The belt 24 is further guided along a tensioning pulley 29, of which a position relative to the carriage 33 can be adjusted to adjust the tension in the belt 24.

The cutting elements 21 have a profiled, i.e. a two-dimensional cross-sectional shape, which implies that the cutting surface 22 is not necessarily aligned in a vertical plane parallel to the vertical axis V. Instead, at least part of the cutting surface 22 is aligned non-parallel to the vertical axis V and has a component parallel to the first horizontal axis H1 and/or the second horizontal axis H2.

A lower side 21' of the cutting element 21 is curved, to form a transition from being aligned vertically to having at least a component aligned parallel to one of the horizontal axes H1, H2. With this lower side 21' of the cutting element 21, a rounded bottom contour of the food products 101 may be obtained. Similarly, an upper side 21" of the cutting element 21 curves towards having at least a horizontal component, to obtain a rounded top contour of the food product 101. The cutting element 21 thereby has a shape that mimics a "C", having a curved upper side 21", a vertical middle part and a curved lower side 21', in order to be able to cut food products 101 with a rounded top contour and a rounded bottom contour.

It is shown in the cross-sectional view of figure 4 that each of the cutting devices 20 comprises an elastic element 35, which is configured to press the respective cutting element 21 against the support surface 10 at a predetermined pretension force. The elastic elements 35 are embodied as compressive springs 35 that are configured to press the respective cutting elements 21 in a downward vertical direction relative to the rotatable shafts 25, thus relative to the carriage 33 as well.

The elastic elements 35 are adjustable, to adjust the predetermined pretension force with which they press the cutting elements 21 against the support surface 10. To this effect, each cutting device comprises an outer set screw 36, with which a pretensioning of the elastic elements 35 can be adjusted, to alter the degree of penetration of the cutting elements 21 into the slab 100 of foodstuff material.

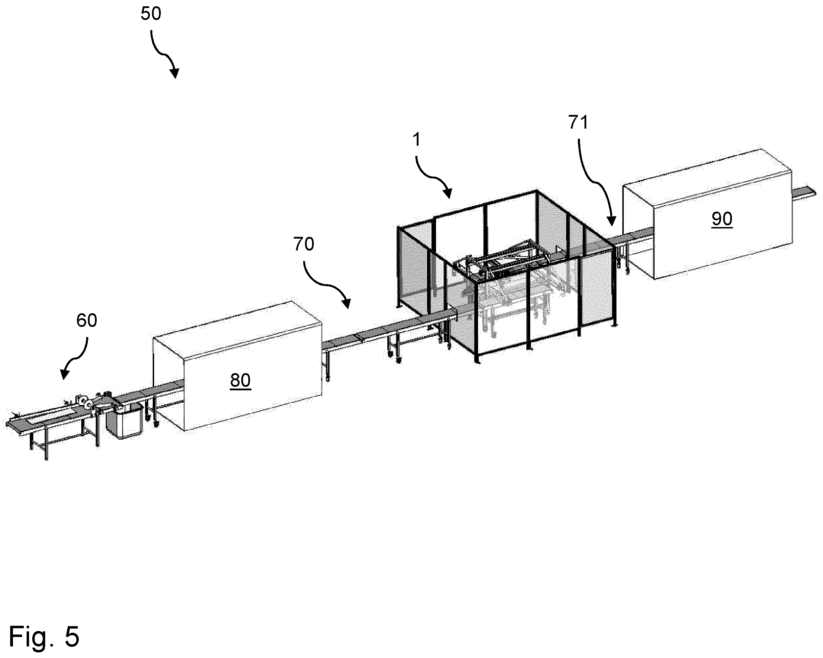

In figure 5, an embodiment of the foodstuff processing apparatus is shown, to which is refereed with reference numeral 50. The foodstuff processing apparatus 50 comprises the foodstuff portioning device 1 shown in figure 1 and described above. The foodstuff processing apparatus 50 is based on the foodstuff portioning device 1, but additionally comprises one or more pre-treatment stations for the slab 100 of foodstuff material and one or more post-treatment stations for the cut-out foodstuff products 101.

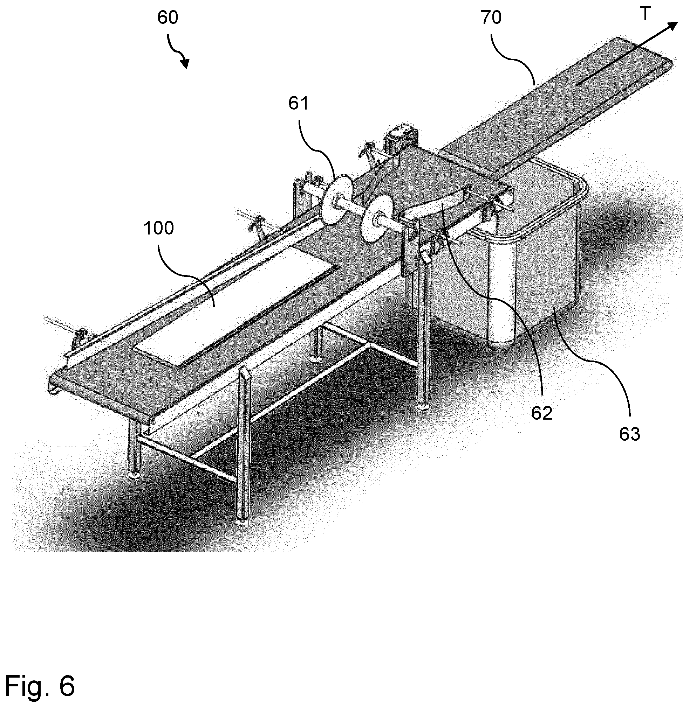

As an example of a pre-treatment station, the foodstuff processing apparatus 50 comprises a trimming device 60, which is configured to treat the slab 100 of foodstuff material prior to entry in the foodstuff portioning device 1. In figure 6, the trimming device 60 is shown in more detail. The foodstuff processing apparatus 50 further comprises an upstream conveyor device 70, configured to transport the slab 100 of foodstuff material from the trimming device 60 to the foodstuff portioning device 1.

The trimming device 60 is configured to trim rough edges of the slab 100 of foodstuff material coming from a texturizing device. In the trimming device 60, the width of the slab 100 of foodstuff material is reduced to a certain predetermined width, substantially corresponding to a spacing between the movable constraining elements 40 in their clamping position, in order to ensure that the slab 100 of foodstuff material can be clamped reliably.

The trimming device 60 is arranged stationary above the upstream conveyor device 70, so that the trimming of the slab 100 of foodstuff material can be carried out while the foodstuff material is transported on the upstream conveyor device 70.

The trimming device 60 thereto comprises two trimming wheels 61 that are spaced at a distance from each other that corresponds to the desired width of the slab 100 of foodstuff material, so that the width can be reduced while the slab of foodstuff 100 material is moved underneath the trimming wheels 61.

The trimming device 60 further comprises two deflector plates 62, which are configured to remove any trimmed-off parts away from the slab 100 of foodstuff material. Seen along a transportation direction T of the slab 100 of foodstuff material, the deflector plates 62 are located downstream of the trimming wheels 61 and may be arranged just above the surface of the upstream conveyor device 70 on which the slab 100 of foodstuff material is arranged.

Each of the trimming wheels 61 has an associated deflector plate 62 arranged behind it, which deflector plates each bend away from a central part of the upstream conveyor device 70. The deflector plates 62 are configured to remain stationary, so that any trimmed-off parts of the slab 100 of foodstuff material are forced against the deflector plates 62 upon movement of the upstream conveyor device 70. The deflector plates 62 are configured to sidewardly slide the trimmed-off parts from the upstream conveyor device 70, after which the trimmed-off parts may be collected in a bin 63 for further use.

The foodstuff processing apparatus 50 further comprises a cooling device 80, located upstream of the foodstuff portioning device 1 and configured to cool the slab 100 of foodstuff material. The cooling device 80 is further located downstream relative to the trimming device 60, seen along the transportation direction T of the slab 100 of foodstuff material. The cooling device 80 is configured to lower the temperature of the slab 100 of foodstuff material, which may result in an increased stiffness of the foodstuff material to reduce deformations of the foodstuff material during cutting.

The foodstuff processing apparatus 50 further comprises a separation device 90, located downstream of the foodstuff portioning device 1 and configured to separate the cut-out foodstuff products 101 from remains 102 of the slab 100 of foodstuff material.

The foodstuff processing apparatus 50 additionally comprises a downstream conveyor device 71, configured to transport the cut-out foodstuff products 101 and the remains 102 of the slab 100 of foodstuff material from the foodstuff portioning device 1 to the separation device 90.

The separation device 90 is an example of a post-treatment device, being configured to filter out the foodstuff products 101 and to discard the remains 102. In the present embodiment, the separation device 90 is a vibratory separation device 90, configured to vibrate a separation surface, in an aim to break the remains 102 in smaller parts, to allow for more convenient separation from the products 101. The separation surface is embodied as a mesh surface with a mesh size small enough to prevent the cut-out foodstuff products 101 from falling through and large enough to allow broken remains 102 of the slab 100of foodstuff material to fall through, after which the remains 102 may be collected for further use as well.

The upstream conveyor device 70 and the downstream conveyor device 71 extend into the foodstuff portioning device 1, as is shown in figure 1. The conveyor devices 70, 71 thereby extend underneath the trajectory of the movable constraining elements 40, as defined by the set of cables 41.

One of the movable constraining elements 40 is configured to move the slab 100 of foodstuff material from the upstream conveyor device 70 onto the support surface 10. Similarly, one of the movable constraining elements 40 is configured to move the cut-out foodstuff products 101 and the remains 102 of the slab 100 of foodstuff material from the support surface 10 onto the downstream conveyor device 71.

These loading and discharging actions may be carried out by a single constraining device 40, being configured to push the foodstuff material from the upstream conveyor device 70 onto the support surface 10, upon moving from a released position to a clamping position, and to further move the foodstuff material from the support surface 10 onto the downstream conveyor device 71, upon moving from the clamping position to a discharge position. This movement of the movable constraining element 40 from the released position to the clamping position and further towards the discharge position is carried out parallel to the second horizontal axis H2 in the present embodiment.

According to this embodiment, no dedicated transfer equipment is needed for moving the slab 100 of foodstuff material from the upstream conveyor device 70 into the foodstuff portioning device 1 and from the foodstuff portioning device 1 onto the downstream conveyor device 71, but the transfer may be carried out by the foodstuff portioning device 1 itself, reducing complexity of the foodstuff processing apparatus 50.

## Claims

1. Foodstuff portioning device (1), configured to portion a slab (100) of foodstuff material into foodstuff products (101), comprising:
- a support surface (10) for supporting the foodstuff material during portioning,
- at least one cutting device (20), each comprising a cutting element (21), configured to cut foodstuff products out of the slab of foodstuff material,
- an actuator device (30),,
wherein the at least one cutting device and/or the support surface is attached to the actuator device and wherein the actuator device is configured to move the at least one cutting device and the support surface relative to each other along a first horizontal axis (H1) and along a second horizontal axis (H2), perpendicular to the first horizontal axis, and
wherein the cutting element of each of the at least one cutting device is rotatable relative to a vertical axis (V),
**characterized in that,**
the at least one cutting element is at least one cutting blade.

2. Foodstuff portioning device according to claim 1, wherein the at least one cutting device comprises at least one rotary drive (23), configured to rotate the respective cutting blade about the vertical axis.

3. Foodstuff portioning device according to claim 1 or 2, comprising multiple cutting devices, arranged in a row, for example in a row parallel to the second horizontal axis.

4. Foodstuff portioning device according to any of the preceding claims, wherein the cutting blades, have a profiled, i.e. a two-dimensional cross-sectional shape, seen in a direction onto a cutting surface of the cutting blade.

5. Foodstuff portioning device according to any of the preceding claims, wherein the support surface is movable relative to the cutting blades along the vertical axis, in order to adjust a cutting depth of the cutting blade in the foodstuff material.

6. Foodstuff portioning device according to any of the preceding claims, wherein each of the cutting devices comprises an elastic element (35), each configured to press the respective cutting blade against the support surface at a predetermined pretension force.

7. Foodstuff portioning device according to any of the preceding claims, further comprising a locking device (27), configured to secure a position of the foodstuff material on the support surface.

8. Foodstuff portioning device according to any of the preceding claims, further comprising at least one movable constraining element (40), configured to be moved between:
- a released position, allowing receipt of the slab of foodstuff material on the support surface, and
- at least one clamping position, configured to clamp the slab of foodstuff material to hold it in place on the support surface.

9. Foodstuff processing apparatus (50), comprising:
- the foodstuff portioning device according to any of the preceding claims,
- a trimming device (60), located upstream of the foodstuff portioning device and configured to trim a width of the slab of foodstuff material, and
- an upstream conveyor device (70), configured to transport the slab of foodstuff material from the trimming device to the foodstuff portioning device.

10. Foodstuff processing apparatus according to claim 9, wherein the trimming device comprises at least one deflector plate (62), configured to remove any trimmed-off parts away from the slab of foodstuff material.

11. Foodstuff processing apparatus according to claim 9 or 10, further comprising a cooling device (80), located upstream of the foodstuff portioning device and configured to cool the slab of foodstuff material.

12. Foodstuff processing apparatus according to any of the claims 9 - 11, wherein at least one of the movable constraining elements is configured to move the slab of foodstuff material from the upstream conveyor device onto the support surface.

13. Foodstuff processing apparatus according to any of the claims 9 - 12, further comprising:
- a separation device (90), located downstream of the foodstuff portioning device and configured to separate the cut-out foodstuff products from remains of the slab of foodstuff material, and
- a downstream conveyor device (71), configured to transport the cut-out foodstuff products and the remains of the slab of foodstuff material from the foodstuff portioning device to the separation device.

14. Foodstuff processing apparatus according to claim 13, wherein at least one of the movable constraining elements is configured to move the cut-out foodstuff products and the remains of the slab of foodstuff material from the support surface onto the downstream conveyor device.

15. Method of portioning foodstuff materials, in particular a slab of a biopolymer mixture for meat substitutes, by means of a foodstuff portioning device according to any of the claims 1 - 8 and/or by means of a foodstuff processing apparatus according to any of the claims 9 - 14, comprising the steps of:
- arranging a slab of foodstuff material on a support surface of the foodstuff portioning device,
- moving, by means of the actuator device, the at least one cutting device relative to the support surface along the first horizontal axis and/or the second horizontal axis, and
- rotating the cutting blade relative to the vertical direction in dependence of the horizonal movement of the at least one cutting device.

## Patentansprüche

1. Lebensmittelportioniervorrichtung (1), die dazu ausgelegt ist, eine Platte (100) aus Lebensmittelmaterial in Lebensmittelprodukte (101) zu portionieren, umfassend:
- eine Stützfläche (10) zum Abstützen des Lebensmittelmaterials während des Portionierens;
- mindestens eine Schneidvorrichtung (20), die jeweils ein Schneidelement (21) umfasst, das dazu ausgelegt ist, Lebensmittelprodukte aus der Platte aus Lebensmittelmaterial zu schneiden,
- eine Aktuatorvorrichtung (30),
wobei die mindestens eine Schneidvorrichtung und/oder die Stützfläche an der Aktuatorvorrichtung angebracht ist und wobei die Aktuatorvorrichtung dazu ausgelegt ist, die mindestens eine Schneidvorrichtung und die Stützfläche relativ zueinander entlang einer ersten horizontalen Achse (H1) und entlang einer zweiten horizontalen Achse (H2) senkrecht zu der ersten horizontalen Achse zu bewegen, und
wobei das Schneidelement jeder der mindestens einen Schneidvorrichtung relativ zu einer vertikalen Achse (V) drehbar ist,
**dadurch gekennzeichnet, dass**
das mindestens eine Schneidelement mindestens eine Schneidklinge ist.

2. Lebensmittelportioniervorrichtung nach Anspruch 1, wobei die mindestens eine Schneidvorrichtung mindestens einen Drehantrieb (23) umfasst, der dazu ausgelegt ist, die jeweilige Schneidklinge um die vertikale Achse zu drehen.

3. Lebensmittelportioniervorrichtung nach Anspruch 1 oder 2, umfassend mehrere Schneidvorrichtungen, die in einer Reihe, beispielsweise in einer Reihe parallel zur zweiten horizontalen Achse, angeordnet sind.

4. Lebensmittelportioniervorrichtung nach einem der vorhergehenden Ansprüche, wobei die Schneidklingen, in einer Richtung auf eine Schneidfläche der Schneidklinge gesehen, eine profilierte, d. h. eine zweidimensionale Querschnittsform aufweisen.

5. Lebensmittelportioniervorrichtung nach einem der vorhergehenden Ansprüche, wobei die Stützfläche relativ zu den Schneidklingen entlang der vertikalen Achse beweglich ist, um eine Schnitttiefe der Schneidklinge in dem Lebensmittelmaterial einzustellen.

6. Lebensmittelportioniervorrichtung nach einem der vorhergehenden Ansprüche, wobei jede der Schneidvorrichtungen ein elastisches Element (35) umfasst, das jeweils dazu ausgelegt ist, die jeweilige Schneidklinge mit einer vorbestimmten Vorspannkraft gegen die Stützfläche zu drücken.

7. Lebensmittelportioniervorrichtung nach einem der vorhergehenden Ansprüche, ferner umfassend eine Verriegelungsvorrichtung (27), die dazu ausgelegt ist, eine Position des Lebensmittelmaterials auf der Stützfläche zu sichern.

8. Lebensmittelportioniervorrichtung nach einem der vorhergehenden Ansprüche, ferner umfassend mindestens ein bewegliches Rückhalteelement (40), das dazu ausgelegt ist, zwischen Folgendem bewegt zu werden:
- einer freigegebenen Position, die eine Aufnahme der Platte aus Lebensmittelmaterial auf der Stützfläche ermöglicht, und
- mindestens einer Klemmposition, die dazu ausgelegt ist, die Platte aus Lebensmittelmaterial einzuklemmen, um sie auf der Stützfläche in Position zu halten.

9. Lebensmittelverarbeitungseinrichtung (50), umfassend:
- die Lebensmittelportioniervorrichtung nach einem der vorhergehenden Ansprüche,
- eine Zuschnittvorrichtung (60), die sich stromaufwärts der Lebensmittelportioniervorrichtung befindet und dazu ausgelegt ist, eine Breite der Platte aus Lebensmittelmaterial zuzuschneiden, und
- eine stromaufwärtige Fördervorrichtung (70), die dazu ausgelegt ist, die Platte aus Lebensmittelmaterial von der Zuschnittvorrichtung zu der Lebensmittelportioniervorrichtung zu transportieren.

10. Lebensmittelverarbeitungseinrichtung nach Anspruch 9, wobei die Zuschnittvorrichtung mindestens eine Ablenkplatte (62) umfasst, die dazu ausgelegt ist, jegliche abgeschnittenen Teile von der Platte aus Lebensmittelmaterial zu entfernen.

11. Lebensmittelverarbeitungseinrichtung nach Anspruch 9 oder 10, ferner umfassend eine Kühlvorrichtung (80), die stromaufwärts der Lebensmittelportioniervorrichtung angeordnet und dazu ausgelegt ist, die Platte aus Lebensmittelmaterial zu kühlen.

12. Lebensmittelverarbeitungseinrichtung nach einem der Ansprüche 9 - 11, wobei mindestens eines der beweglichen Rückhalteelemente dazu ausgelegt ist, die Platte aus Lebensmittelmaterial von der stromaufwärtigen Fördervorrichtung auf die Stützfläche zu bewegen.

13. Lebensmittelverarbeitungseinrichtung nach einem der Ansprüche 9 - 12, ferner umfassend:
- eine Trennvorrichtung (90), die stromabwärts der Lebensmittelportioniervorrichtung angeordnet und dazu ausgelegt ist, die ausgeschnittenen Lebensmittelprodukte von Resten der Platte aus Lebensmittelmaterial zu trennen, und
- eine stromabwärtige Fördervorrichtung (71), die dazu ausgelegt ist, die ausgeschnittenen Lebensmittelprodukte und die Reste der Platte aus Lebensmittelmaterial von der Lebensmittelportioniervorrichtung zu der Trennvorrichtung zu transportieren.

14. Lebensmittelverarbeitungseinrichtung nach Anspruch 13, wobei mindestens eines der bewegbaren Rückhalteelemente dazu ausgelegt ist, die ausgeschnittenen Lebensmittelprodukte und die Reste der Platte aus Lebensmittelmaterial von der Stützfläche auf die stromabwärtige Fördervorrichtung zu bewegen.

15. Verfahren zum Portionieren von Lebensmittelmaterialien, insbesondere einer Platte aus einer Biopolymermischung für Fleischersatzprodukte, mittels einer Lebensmittelportioniervorrichtung nach einem der Ansprüche 1 - 8 und/oder mittels einer Lebensmittelverarbeitungseinrichtung nach einem der Ansprüche 9 - 14, umfassend die folgenden Schritte:
- Anordnen einer Platte aus Lebensmittelmaterial auf einer Stützfläche der Lebensmittelportioniervorrichtung,
- Bewegen, mittels der Aktuatorvorrichtung, der mindestens einen Schneidvorrichtung relativ zu der Stützfläche entlang der ersten horizontalen Achse und/oder der zweiten horizontalen Achse, und
- Drehen der Schneidklinge relativ zur vertikalen Richtung in Abhängigkeit von der horizontalen Bewegung der mindestens einen Schneidvorrichtung.

## Revendications

1. Dispositif de mise en portion de denrées alimentaires (1), configuré pour mettre en portion un bloc (100) de matière de denrées alimentaire en produits de denrées alimentaire (101), comprenant :
- une surface de support (10) destinée à supporter la matière de denrées alimentaire durant la mise en portion,
- au moins un dispositif de coupe (20), chacun comprenant un élément de coupe (21), configuré pour découper des produits de denrées alimentaire à partir du bloc de matière de denrées alimentaire,
- un dispositif actionneur (30),
dans lequel l'au moins un dispositif de coupe et/ou la surface de support sont assujettis au dispositif actionneur et dans lequel le dispositif actionneur est configuré pour mettre en mouvement l'au moins un dispositif de coupe et la surface de support l'un relativement à l'autre le long d'un premier axe horizontal (H1) et le long d'un second axe horizontal (H2), perpendiculaire au premier axe horizontal, et
dans lequel l'élément de coupe de chacun de l'au moins un dispositif de coupe peut être mis en rotation relativement à un axe vertical (V),
**caractérisé en ce que**,
l'au moins un élément de coupe est au moins une lame de coupe

2. Dispositif de mise en portion de denrées alimentaires selon la revendication 1, dans lequel l'au moins un dispositif de coupe comprend au moins un entraînement rotatif (23), configuré pour mettre en rotation la lame de coupe respective autour de l'axe vertical.

3. Dispositif de mise en portion de denrées alimentaires selon la revendication 1 ou 2, comprenant de multiples dispositifs de coupe, agencés en une rangée, par exemple en une rangée parallèle au second axe horizontal.

4. Dispositif de mise en portion de denrées alimentaires selon de quelconque des revendications précédentes, dans lequel les lames de coupe ont une forme profilée, à savoir de section transversale bidimensionnelle, en vue dans une direction en regard 'une surface de coupe de la lame de coupe.

5. Dispositif de mise en portion de denrées alimentaires selon de quelconque des revendications précédentes, dans lequel la surface de support est mobile relativement aux lames de coupe le long de l'axe vertical, afin d'ajuster une longueur de coupe de la lame de coupe dans la matière de denrées alimentaire.

6. Dispositif de mise en portion de denrées alimentaires selon de quelconque des revendications précédentes, dans lequel chacun des dispositifs de coupe comprend un élément élastique (35), chacun configuré pour presser la lame de coupe respective contre la surface de support à une force de prétension prédéterminée.

7. Dispositif de mise en portion de denrées alimentaires selon de quelconque des revendications précédentes, comprenant en outre un dispositif de verrouillage (27), configuré pour fixer une position de la matière de denrées alimentaire sur la surface de support.

8. Dispositif de mise en portion de denrées alimentaires selon de quelconque des revendications précédentes, comprenant en outre au moins un élément de contrainte mobile (40), configuré pour être mis en mouvement entre :
- une position libérée, permettant la réception du bloc de matière de denrées alimentaire sur la surface de support, et
- au moins une position de serrage, configurée pour serrer le bloc de matière de denrées alimentaire pour le maintenir en place sur la surface de support.

9. Appareil de traitement de denrées alimentaires (50), comprenant :
- le dispositif de mise en portion de denrées alimentaires selon de quelconque des revendications précédentes,
- un dispositif de taillage (60), situé en amont du dispositif de mise en portion de denrées alimentaires et configuré pour tailler une largeur du bloc de matière de denrées alimentaire, et
- un dispositif convoyeur amont (70), configuré pour transporter le bloc de matière de denrées alimentaire depuis le dispositif de taillage jusqu'au dispositif de mise en portion de denrées alimentaires.

10. Appareil de traitement de denrées alimentaires selon la revendication 9, dans lequel le dispositif de taillage comprend au moins une plaque déflectrice (62), configurée pour enlever toutes parties taillées pour les éloigner du bloc de matière de denrées alimentaire.

11. Appareil de traitement de denrées alimentaires selon la revendication 9 ou 10, comprenant en outre un dispositif de refroidissement (80), situé en amont du dispositif de mise en portion de denrées alimentaires et configuré pour refroidir le bloc de matière de denrées alimentaire.

12. Appareil de traitement de denrées alimentaires selon de quelconques des revendications 9 à 11, dans lequel au moins un des éléments de contrainte mobiles est configuré pour mettre en mouvement le bloc de matière de denrées alimentaire depuis le dispositif convoyeur amont jusque sur la surface de support.

13. Appareil de traitement de denrées alimentaires selon de quelconques des revendications 9 à 12, comprenant en outre :
- un dispositif de séparation (90), situé en aval du dispositif de mise en portion de denrées alimentaires et configuré pour séparer les produits de denrées alimentaire découpées de restes du bloc de matière de denrées alimentaire, et
- un dispositif convoyeur aval (71), configuré pour transporter les produits de denrées alimentaire découpés et les restes du bloc de matière de denrées alimentaire depuis le dispositif de mise en portion de denrées alimentaires jusqu'au dispositif de séparation.

14. Appareil de traitement de denrées alimentaires selon la revendication 13, dans lequel au moins un des éléments de contrainte mobiles est configuré pour mettre en mouvement les produits de denrées alimentaire découpés et les restes du bloc de matière de denrées alimentaire depuis la surface de support jusque sur le dispositif convoyeur aval.

15. Procédé de la mise en portion matière de denrées alimentaires, en particulier un bloc d'un mélange biopolymère pour substituts de viande, au moyen d'un dispositif de mise en portion de denrées alimentaires selon de quelconques des revendications 1 à 8 et/ou au moyen d'un appareil de traitement de denrées alimentaires selon de quelconques des revendications 9 à 14, comprenant les étapes de :
- l'agencement d'un bloc de matière de denrées alimentaire sur une surface de support du dispositif de mise en portion de denrées alimentaires,
- la mise en mouvement, au moyen du dispositif actionneur, de l'au moins un dispositif de coupe relativement à la surface de support le long du premier axe horizontal et/ou du second axe horizontal, et
- la mise en rotation de la lame de coupe relativement à la direction verticale en fonction du mouvement horizontal de l'au moins un dispositif de coupe.
